# EUROPÄISCHE PATENTSCHRIFT

(11) **EP 3 622 572 B1**
(45) Veröffentlichungstag und Bekanntmachung des Hinweises auf die Patenterteilung: **01.01.2025**
(21) Anmeldenummer: 18724227.6
(22) Anmeldetag: 11.05.2018
(51) Int. Cl.: H01M 50/114, H01M 50/308, H01M 50/317, H01M 10/12

(54) **VERFAHREN ZUM HERSTELLEN EINES ENERGIESPEICHERSYSTEM FÜR EIN FAHRZEUG**
METHOD OF MANUFACTURING AN ENERGY STORAGE SYSTEM FOR VEHICLE
PROCÉDÉ DE FABRICATION D'UN SYSTÈME DE STOCKAGE D'ÉNERGIE POUR VÉHICULE

(30) Priorität: 11.05.2017 DE 102017110218
(43) Veröffentlichungstag der Anmeldung: 18.03.2020
(73) Patentinhaber: Clarios Germany GmbH & Co. KG, 30419 Hannover (DE)
(72) Erfinder: HAMMOUCHE, Abderrezak, 30419 Hannover (DE); EHRLICH, Bernhard, 31535 Neustadt am Rübenberge (DE); JÄPPELT, Rüdiger, 31139 Hildesheim (DE); GÖRTLER, Stephan Andreas, 31275 Lehrte (DE)
(74) Vertreter: Meissner Bolte Partnerschaft mbB
(86) Internationale Anmeldenummer: PCT/EP2018/062198
(87) Internationale Veröffentlichungsnummer: WO 2018/206759

(56) Entgegenhaltungen:
- EP-A1- 0 305 822
- EP-A1- 1 059 680
- US-A1- 2009 068 549
- US-A1- 2009 169 978

## Beschreibung

Die vorliegende Erfindung betrifft allgemein ein Energiespeichersystem für ein Fahrzeug, insbesondere eine Starterbatterie für ein Fahrzeug, und insbesondere ein Verfahren zum Herstellen eines solchen Energiespeichersystems.

Typischerweise kommen als Starterbatterien für Fahrzeuge meist 12 Volt Bleisäurebatterien zum Einsatz. Diese sind dazu ausgelegt, eine als Verbrennungsmotor ausgebildete Antriebseinheit zu starten sowie zur Aufrechterhaltung der Funktion des Bordnetzes; d. h. die Starterbatterie stellt den beim Starten des Fahrzeuges benötigten hohen Strom bereit. Während der Fahrt kann die Starterbatterie darüber hinaus Spannung an ein Bordnetz des Fahrzeugs abgeben und Ladung aufzunehmen.

Die Starterbatterie weist üblicherweise eine Vielzahl von Batteriezellen auf, die elektrisch miteinander verbunden sind. Die einzelnen Batteriezellen sind aber für sich gegenüber ihrer Umgebung und anderen Batteriezellen beispielsweise über ein Zellengehäuse abgedichtet.

Durch die in der Starterbatterie ablaufenden elektrochemischen Reaktionen während eines Lade- bzw. Überlade-Vorgangs sammelt sich in einem oberen Zellenraum bzw. Gasraum typischerweise eine Gasmischung, die zumindest aus Wasserstoff, Sauersoff und Kohlendioxid zusammengesetzt ist. Bei einer ventilgeregelten Bleisäurebatterie kann eine beträchtliche Menge an Sauerstoff während des Betriebs in Richtung von negativen Elektrodenplatten diffundieren und dort einer Rekombinations-Reaktion zu Wasser unterliegen; Wasserstoff und Kohlenstoffdioxid können allerdings nicht so einfach wieder abgebaut werden.

Da der Gasdruck im Gasraum ständig ansteigt, wird aus Sicherheitsgründen herkömmlicherweise jede Batteriezelle mit einem (eigenen) Einwegeventil ausgestattet, das immer dann öffnet, wenn der Gasdruck in dem oberen Bereich des Zellenraums einen vorbestimmten oder vorbestimmbaren Öffnungsdruck erreicht.

Nachdem eine bestimmte Menge an Gas entwichen ist, sinkt der Gasdruck in der Batteriezelle und das Entlüftungsventil schließt, sobald der Gasdruck einen vorbestimmten oder vorbestimmbaren Schließwert erreicht.

Dabei wird davon ausgegangen, dass alle Batteriezellen einen gleichen bzw. ähnlichen Gasdruck und eine gleiche bzw. ähnliche Gaszusammensetzung in deren oberen Bereichen aufweisen. In der Praxis kann allerdings festgestellt werden, dass die einzelnen Entlüftungsventile eine signifikante Variation in deren Funktionsweisen zeigen.

Zum einen stimmen die tatsächlichen Öffnungs- und Schließdrücke der Entlüftungsventile oft nicht mit den vorbestimmten bzw. vorbestimmbaren Werten überein. Des Weiteren können sich die tatsächlichen Öffnungs- bzw. Schließdruck-Werte während des Betriebs der Batterie bzw. während der Lebensdauer der Batterie verändern, und zwar durch eine Alterung der Entlüftungsventile, insbesondere unter schwierigen und beanspruchenden Bedingungen wie z. B. bei hohen Temperaturen, Überladung, und/oder beim Auftreten von Säuredämpfen.

Dabei können bestimmte Entlüftungsventile sogar für eine lange Zeit "quasi offen" bleiben, was zu einem langsameren Rekombinations-Prozess und höherem Wasserverlust führt.

Zusammengefasst weisen solche herkömmlichen Energiespeichersysteme also den Nachteil auf, dass die einzelnen Batteriezellen zumindest nach einer gewissen Betriebsdauer nicht mehr den gleichen oder einen ähnlichen Gasdruck und eine gleiche bzw. ähnliche Gaszusammensetzung haben, wodurch sich auch die Leistungsfähigkeit der einzelnen Batteriezellen verschlechtern bzw. verändern kann.

Zudem können durch eine derartige Ausgestaltung einer Starterbatterie sogar einzelne Zellen komplett versagen, wodurch im schlimmsten Fall die Starterbatterie nicht mehr in der Lage ist, das Fahrzeug zu starten, bzw. das Bordnetz mit Energie zu versorgen.

Da bei derartigen Energiespeichersystemen die einzelnen Batteriezellen getrennt voneinander und abgedichtet ausgebildet sind, müssen solche Batteriezellen, insbesondere vor ihrem Einsatz, auf ihre Zell-zu-Zell-Gasdichtigkeit überprüft werden.

Das Dokument EP 0 305 822 A1 betrifft eine mehrzellige Batterie mit in den Batteriedeckel integrierter zentraler Entgasungsleitung, die durch einen porösen Körper nach außen abgeschlossen ist.

Aus der EP 0 305 822 A1 ist ein Verfahren bekannt zum Herstellen eines Energiespeichersystems für ein Fahrzeug, insbesondere einer Starterbatterie für ein Fahrzeug, wobei das Verfahren Folgendes aufweist: Bereitstellen eines Energiespeichersystems, welches eine Vielzahl von Energiespeicherzellen zum Bereitstellen und/oder Speichern von elektrischer Energie und ein Gehäuse aufweist, das eine Vielzahl von Wandelementen aufweist, die einen Innenraum des Gehäuses begrenzen, wobei das Gehäuse dazu ausgebildet ist, die Vielzahl von Energiespeicherzellen in dem Innenraum des Gehäuses aufzunehmen, wobei in dem Innenraum des Gehäuses eine Vielzahl von Trennwänden zum Unterteilen des Innenraums des Gehäuses in eine Vielzahl von Kammern angeordnet ist, wobei jede Kammer dazu ausgebildet ist, eine Energiespeicherzelle aufzunehmen, wobei zwischen den einzelnen Kammern eine Fluidverbindung ausgebildet ist, und wobei an einem Deckelelement des Gehäuses in einem einer Kammer zugeordneten Bereich ein Entlüftungsventil angeordnet ist.

Der Erfindung liegt die Aufgabe zu Grunde, ein Herstellungsverfahren für ein Energiespeichersystem bereitzustellen, wobei das hergestellte Energiespeichersystem die Einschränkungen des Stands der Technik nicht aufweist und zudem einfacher, schneller und kostengünstiger herstellbar ist. Auch soll das hergestellte Energiespeichersystem eine erhöhte Qualität und Sicherheit gewährleisten.

Die der Erfindung zu Grunde liegende Aufgabe wird erfindungsgemäß durch das im unabhängigen Patentanspruch 1 genannte Verfahren gelöst, wobei vorteilhafte Weiterbildungen des erfindungsgemäßen Verfahrens in den abhängigen Ansprüchen angegeben sind.

Demnach betrifft die Erfindung insbesondere ein Verfahren zum Herstellen eines Energiespeichersystems für ein Fahrzeug, wobei es sich bei dem Energiespeichersystem insbesondere um eine Starterbatterie handelt.

Das Energiespeichersystem weist eine Vielzahl von Energiespeicherzellen zum Bereitstellen und/oder Speichern von elektrischer Energie, und ein Gehäuse auf, das eine Vielzahl von Wandelementen aufweist, die einen Innenraum des Gehäuses begrenzen. Das Gehäuse ist dabei dazu ausgebildet, die Vielzahl von Energiespeicherzellen in dem Innenraum des Gehäuses aufzunehmen. Des Weiteren ist in dem Innenraum des Gehäuses eine Vielzahl von Trennwänden zum Unterteilen des Innenraums des Gehäuses in eine Vielzahl von Kammern angeordnet. Jede Kammer ist ferner dazu ausgebildet, eine Energiespeicherzelle aufzunehmen, wobei zwischen den einzelnen Kammern eine Fluidverbindung ausgebildet ist. Dabei ist an einem der Wandelemente, vorzugsweise einem Deckelelement, des Gehäuses in jeweils einem einer entsprechenden Kammer zugeordneten Bereich ein Entlüftungsventil angeordnet, wobei mindestens eines der Entlüftungsventile ein aktives Entlüftungsventil ist und die übrigen Entlüftungsventile Blindverschlüsse sind.

Die Vorteile der Erfindung liegen dabei auf der Hand. Zum einen können Produkt- und Herstellungskosten gesenkt werden, und zwar auf der einen Seite durch Reduzieren der Anzahl an benötigten aktiven Entlüftungsventilen, und auf der anderen Seite dadurch, dass herkömmliche bzw. konventionelle Gehäuse durch Austauschen der herkömmlichen (dichten) Trennwände mit den erfindungsgemäßen Trennwänden, die dazu ausgebildet sind, eine Fluidverbindung zwischen den einzelnen Kammern zu ermöglichen, einfach weitergebildet bzw. nachgerüstet werden können, und zwar ohne neue Herstellwerkzeuge für das Gehäuse bereitstellen zu müssen.

Das Reduzieren der Anzahl an aktiven Entlüftungsventilen geht auch mit einer schnelleren Fertigung des Energiespeichersystems einher, da die Herstellungszeit eines im Vergleich zu einem Blindverschluss relativ aufwändigen Entlüftungsventils sinkt, was zugleich auch die Herstellungskosten herabsetzt.

Des Weiteren können Zeit und Kosten eingespart werden, weil auf den Test zur Zell-zu-Zell-Auflaufdichtheit verzichtet werden kann.

Auch können nachdem der Elektrolyt den Energiespeicherzellen zugeführt worden ist, alle Energiespeicherzellen gleichermaßen evakuiert werden. Dadurch wird nur noch eine Vakuumpumpe benötigt anstatt - wie bisher üblich - für jede Kammer eine, wodurch der Herstellungsaufwand gering gehalten werden kann.

Ferner kann die Batteriequalität verbessert werden, und zwar dadurch, dass durch das Ausbilden der Fluidverbindung zwischen den einzelnen Kammern dafür gesorgt wird, dass die einzelnen Energiespeicherzellen gleichermaßen entlüftet werden und sich so zumindest im Wesentlichen keine Qualitätsunterschiede in den einzelnen Energiespeicherzellen aufgrund von unterschiedlichen Gasdrücken und/oder Gaszusammensetzungen der einzelnen Energiespeicherzellen ausbilden können.

Zum anderen können auch die Überprüfungskosten und der Überprüfungsaufwand vorteilhafterweise reduziert werden, und zwar dadurch, dass für Sicherheitszwecke der Gasdruck, die Gaszusammensetzung und/oder der Gasstrom von nur noch einem Raum geprüft werden muss, anstelle des Gasdrucks, der Gaszusammensetzung und/oder des Gasstroms einer jeder einzelnen Energiespeicherzelle bei herkömmlichen Energiespeichersystemen. Daher können Sicherheitsangelegenheiten, die mit dem Gasmanagement zu tun haben, besser gehandhabt werden, wenn nur ein aktives Entlüftungsventil bzw. zwei aktive Entlüftungsventile vorhanden sind als wenn - wie bei herkömmlichen Energiespeichersystemen - jede Energiespeicherzelle ein eigenes Entlüftungsventil aufweist.

Diese und weitere vorteilhafte Effekte sind auch in den abhängigen Patentansprüchen zu finden.

Gemäß einem weiteren Aspekt der Erfindung ist mindestens eines der Entlüftungsventile als Blindverschluss ausgebildet.

Gemäß einem weiteren Aspekt der Erfindung ist an dem einen Wandelement, insbesondere an dem Deckelelement, des Gehäuses genau ein aktives Entlüftungsventil angeordnet, und zwar bevorzugt derart, dass das aktive Entlüftungsventil einer Kammer zugeordnet ist, die in einem zentralen Bereich des Innenraums des Gehäuses angeordnet ist.

Gemäß einem weiteren Aspekt der Erfindung sind an dem einen Wandelement, insbesondere an dem Deckelelement, des Gehäuses zwei aktive Entlüftungsventile angeordnet, und zwar bevorzugt derart, dass die beiden aktiven Entlüftungsventile zwei Kammern zugeordnet sind, die über mindestens eine (weitere) Kammer, der ein Blindverschluss zugeordnet ist, voneinander getrennt sind.

Gemäß einem weiteren Aspekt der Erfindung weist jede Trennwand mindestens eine Öffnung zum Ausbilden der Fluidverbindung zwischen den einzelnen Kammern auf.

Gemäß einem weiteren Aspekt der Erfindung weist mindestens eine der Vielzahl von Trennwänden, insbesondere alle Trennwände, jeweils genau eine Öffnung in einem oberen Bereich der jeweiligen Trennwand auf.

Gemäß einem weiteren Aspekt der Erfindung ist die eine Öffnung pro Trennwand derart angeordnet, dass mindestens zwei benachbarte Trennwände die Öffnung versetzt aufweisen, insbesondere alternierend versetzt, und zwar bevorzugt in einem oberen Endbereichen bzw. in einem von zwei oberen Eckbereichen der Trennwände.

Gemäß einem weiteren Aspekt der Erfindung weist mindestens eine Trennwand, insbesondere alle Trennwände, die eine Öffnung in einem oberen, zentralen Bereich der jeweiligen Trennwand auf.

Gemäß einem weiteren Aspekt der Erfindung weist mindestens eine der Vielzahl von Trennwänden, insbesondere alle Trennwände, jeweils genau zwei Öffnungen in einem oberen Bereich der jeweiligen Trennwand auf, wobei die beiden Öffnungen bevorzugt jeweils an zwei oberen Endbereichen bzw. an zwei oberen Eckbereichen der entsprechenden Trennwand angeordnet sind.

Gemäß einem weiteren Aspekt der Erfindung ist in mindestens einer der Öffnungen, insbesondere in jeder Öffnung, eine Membran ausgebildet.

Gemäß einem weiteren Aspekt der Erfindung ist das aktive Entlüftungsventil als Einwegeventil mit einem vorbestimmten oder vorbestimmbaren Entlüftungsdruck ausgebildet, wobei das Einwegeventil dabei bevorzugt in einem Verschlussstopfen integriert ist.

Gemäß einem weiteren Aspekt der Erfindung sind die Blindverschlüsse als Verschlussstopfen ausgebildet, die dazu ausgebildet sind, den Innenraum des Gehäuses dicht zu verschließen.

Gemäß einem weiteren Aspekt der Erfindung ist das Energiespeichersystem eine Bleisä urebatterie.

Gemäß einem weiteren Aspekt der Erfindung ist das Energiespeichersystem als ventilgeregelte Bleisäurebatterie ausgebildet, insbesondere als ventilgeregelte Absorbent Glass Mat (AGM) Bleisäurebatterie.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeuges;
- FIG. 2: eine schematische Darstellung eines Energiespeichersystems der vorliegenden Erfindung;
- FIG. 3: eine schematische Darstellung des Energiespeichersystems der vorliegenden Erfindung;
- FIG. 4: eine schematische Darstellung eines Energiespeichersystems gemäß eines Aspekts der vorliegenden Erfindung; und
- FIG. 5: eine schematische Darstellung einer Weiterbildung des Energiespeichersystems gemäß FIG. 4.

Nachfolgend wird das erfindungsgemäße Energiespeichersystem unter Bezugnahme auf die Darstellungen in den Figuren genauer beschrieben. Dabei sind gleiche oder gleichwirkende Elemente und Funktionen mit denselben oder ähnlichen Bezugszeichen versehen.

Energiespeichersysteme 100, die dazu ausgelegt sind, einen Verbrennungsmotor eines Fahrzeuges 200 zu starten, werden allgemein als Starterbatterien bezeichnet. Solche Starterbatterien basieren meistens auf einer Bleisäure-Technologie. Allerdings ist es genauso gut denkbar, andere Energiespeichersystem-Technologien zu verwenden. Beispielsweise ist es auch denkbar, eine Starterbatterie, welche auf einer Lithium-Ionen-Technologie, einer Nickel-Metallhydrid-Technologie oder Nickel-Kadmium-Technologie basiert, zu verwenden.

Im Folgenden wird das Energiespeichersystem 100 derart beschrieben, dass relative Begriffe auf den Einbau-Zustand des Energiespeichersystems 100 bezogen sind. So bedeutet beispielsweise "in einem oberen Bereich" in einem im eingebauten Zustand gesehenen oberen Bereich, etc.

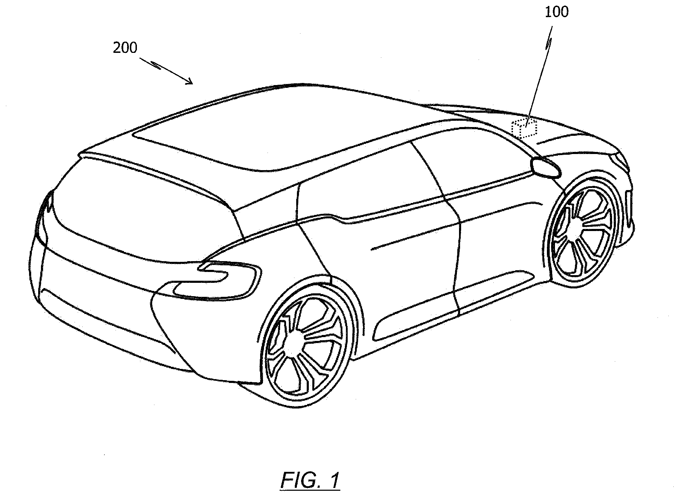

FIG. 1 zeigt eine schematische Darstellung eines Fahrzeuges 200. Das Energiespeichersystem 100 kann hierbei in einem in Fahrtrichtung vorderen Bereich des Fahrzeuges 200, in einem hinteren Bereich des Fahrzeuges 200 und/oder in einem Bereich unterhalb der Sitze, insbesondere unterhalb des Fahrersitzes angeordnet sein.

Das Fahrzeug 200 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus oder ein Wohnmobil verstanden werden kann.

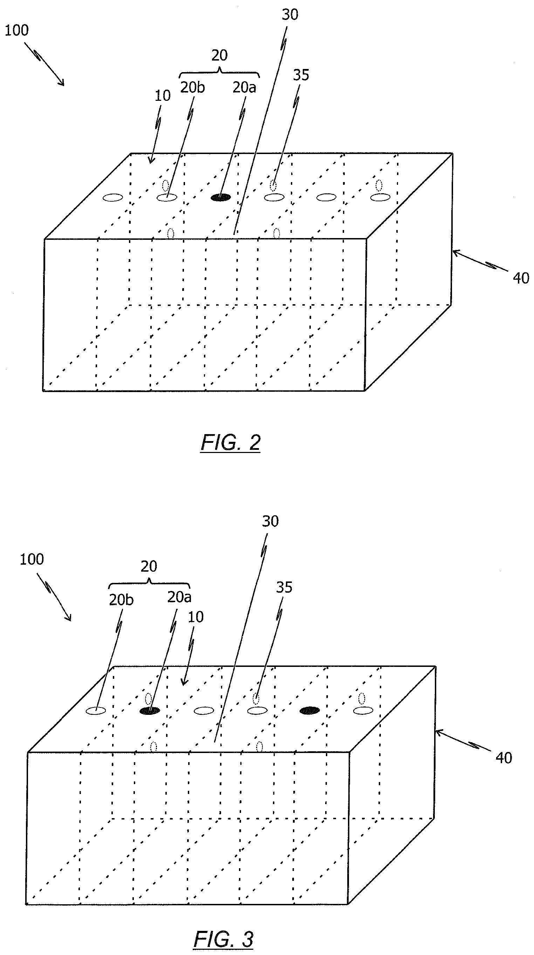

FIG. 2 zeigt eine schematische Darstellung eines erfindungsgemäßen Energiespeichermoduls 100. Zur besseren Übersichtlichkeit sind einzelne Elemente wie beispielsweise Terminals des Energiespeichersystems 100, die einzelnen Energiespeicherzellen sowie deren Bestandteile nicht explizit dargestellt.

Das erfindungsgemäße Energiespeichersystem 100 weist ein Gehäuse 40 aus einer Vielzahl von Wandelementen auf. Die Wandelemente begrenzen einen Innenraum des Gehäuses 40, der dazu ausgebildet ist, eine Vielzahl von Energiespeicherzellen (nicht dargestellt) aufzunehmen.

Um den Innenraum des Gehäuses 40 beispielsweise zu Montage- und/oder Wartungszwecken zugänglich zu machen, ist ein Wandelement, insbesondere ein oberes Wandelement oder Deckelelement, des Gehäuses 40 derart ausgebildet, dass das Wandelement von dem Gehäuse 40 abnehmbar und/oder mit diesem (abdichtend) verbindbar ist, so dass das Gehäuse 40 einfach geöffnet bzw. (dicht) geschlossen werden kann.

Der Innenraum des Gehäuses 40 wird durch eine Vielzahl von Trennwänden 30 in einzelne Kammern 10 unterteilt. Jede Kammer 10 ist dazu ausgebildet, eine der jeweiligen Kammer 10 zugehörige Energiespeicherzelle aufzunehmen.

Gemäß der vorliegenden Erfindung ist es wesentlich, eine Fluidverbindung, insbesondere eine Strömungsverbindung für Gase, zwischen den einzelnen durch die Vielzahl von Trennwänden 30 gebildeten Kammern 10 zu schaffen. Die Fluidverbindung zwischen den einzelnen Kammern 10, insbesondere derart, dass in dem Innenraum ein gemeinsamer Gassammelraum gebildet ist, kann dadurch geschaffen werden, dass jede der Vielzahl von Trennwänden 30 mindestens eine Öffnung 35 aufweist.

Jede Energiespeicherzelle kann dabei eine Vielzahl von negativen Elektrodenplatten, positiven Elektrodenplatten und Separatoren aufweisen, wobei die einzelnen Energiespeicherzellen miteinander in Reihenschaltung und/oder Parallelschaltung verbunden sind, insbesondere über Sammelschienen, welche letztendlich mit den Terminals (nicht in den Figuren dargestellt) des Energiespeichersystems 100 verbunden sind.

Über die Terminals kann elektrische Energie an elektrische Verbraucher während eines Entladevorgangs abgegeben bzw. elektrische Energie den einzelnen Energiespeicherzellen während eines Ladevorgangs, beispielsweise während eines regenerativen Bremsvorgangs, wieder zugeführt werden.

Die Energiespeicherzellen können jeweils in einem (gasdurchlässigen) Zellengehäuse angeordnet sein oder direkt (d. h. ohne zusätzliches Zellengehäuse) in die einzelnen Kammern 10 aufgenommen werden.

Das Gehäuse 40 des Energiespeichersystems 100 ist üblicherweise zunächst an einer Seite, bevorzugt an der oberen Seite, offen, um bei der Montage des Energiespeichersystems 100 gegebenenfalls die Trennwände 30 sowie die Energiespeicherzellen in den so gebildeten Kammern 10 aufzunehmen.

Die Trennwände 30 weisen dabei die mindestens eine Öffnung 35 auf, aufgrund derer die Fluidverbindung bzw. eine strömende Verbindung zwischen den einzelnen Kammern 10 ausgebildet wird. In diesem Zusammenhang kann unter einer Fluidverbindung eine Verbindung zwischen den einzelnen Kammern 10 verstanden werden, über die Gas, Gase und/oder eine Gasmischung zwischen den einzelnen Kammern 10 in einer strömenden Verbindung steht, und insbesondere keine Flüssigkeiten.

Dabei kann es auch vorgesehen sein, dass in mindestens einer, insbesondere allen, der mindestens einen Öffnung 35 eine Membran ausgebildet ist, insbesondere eine Membran, die ausschließlich für Gas, Gase, und/oder eine Gasmischung durchlässig ist. Dadurch kann vorteilhafterweise verhindert werden, dass Flüssigkeiten, wie beispielsweise der Elektrolyt, von Kammer 10 zu Kammer 10 fließen.

Die mindestens eine Öffnung 35 kann dabei bereits beim Herstellen der jeweiligen Trennwand 30 direkt ausgebildet werden; sie kann aber genauso gut auch nach Herstellen der Trennwand 30 in diese eingebracht werden.

Die mindestens eine Öffnung 35 kann dabei jedwede Form aufweisen, beispielsweise kann die Öffnung 35 rund, rechteckig, oval oder quadratisch ausgebildet sein. Die Öffnung 35 kann dabei eine Querschnittsfläche von in etwa 20 mm² bis 320 mm², bevorzugt von 75 mm² bis 180 mm², besonders bevorzugt von 75 mm² bis 80 mm². Eine zumindest im Wesentlichen rund ausgebildete Öffnung 35 kann dabei beispielsweise einen Durchmesser von (in etwa) 5 mm bis 20 mm aufweisen, bevorzugt von (in etwa) 10 mm bis 15 mm, besonders bevorzugt von 10 mm.

Dabei kann es vorteilhaft sein, wenn die mindestens eine Öffnung 35 in einem oberen Bereich der Trennwand 30 angeordnet ist, da sich Gas, Gase und/oder eine Gasmischung, wie beispielsweise Sauerstoff, Kohlenstoffdioxid, und/oder Wasserstoff in einem oberen Bereich des Energiespeichersystems 100 bzw. in einem oberen Bereich einer jeden Kammer 10 sammeln.

Es ist aber auch denkbar, dass mindestens eine Trennwand 30 mindestens eine Öffnung 35 aufweist, die im Vergleich mit mindestens einer Öffnung 35 einer anderen Trennwand 30, welche in einem oberen Bereich angeordnet ist, (in vertikaler Richtung gesehen) tiefer gelegen angeordnet ist. Insbesondere kann eine derart tiefergelegene Öffnung 35 eine Membran aufweisen, um sicherzustellen, dass ausschließlich Gase durch die Öffnung diffundieren können, und keine Flüssigkeiten.

Insbesondere können die Trennwände 30 separat von dem Gehäuse 40 ausgebildet sein, und in entsprechend in dem Gehäuse 40 ausgebildete Führungsnuten in den Innenraum des Gehäuses 40 eingeführt werden.

Insbesondere können dadurch bereits existierende bzw. zumindest bereits zum Teil gefertigte Gehäuse 40 einfach und kostengünstig nachgerüstet werden, und zwar dadurch dass anstelle der konventionellen Trennwände die erfindungsgemäßen Trennwände 30 in den Innenraum des Gehäuses 40 eingesetzt werden können. Auch können bereits existierende (konventionelle) Trennwände leicht nachgerüstet werden, indem mindestens eine erfindungsgemäße Öffnung 35 in die Trennwand 30 (nachträglich) eingebracht wird.

Genauso gut können die Trennwände 30 allerdings auch integral mit dem Gehäuse 40 ausgebildet werden, beispielsweise beim Herstellen des Gehäuses 40 in einem Spritzgussprozess.

Insbesondere wird zum Verringern eines Herstellungsaufwands, sowie zum Senken der Herstellungskosten, bevorzugt ein herkömmliches Gehäuse verwendet. Bei herkömmlichen Energiespeichersystemen musste bisher jede Kammer für sich bzw. einzeln entlüftet werden. Daher ist in einem Wandelement, insbesondere einem oberen Wandelement bzw. einem Deckelelement, des Gehäuses 40 in jeweils einem einer entsprechenden Kammer 10 zugeordneten Bereich eine Entlüftungsöffnung angeordnet, die dazu ausgelegt ist, mit Hilfe eines Entlüftungsventils 20 (dicht) verschlossen zu werden.

Bei herkömmlichen Systemen war es zwingend nötig, dass jedes Entlüftungsventil ein aktives Entlüftungsventil ist.

Aufgrund der zwischen den Kammern 10 bestehenden erfindungsgemäßen Fluidverbindung, und damit eines gemeinsamen Gassammelraums muss gemäß der vorliegenden Erfindung nur noch mindestens ein aktives Entlüftungsventil 20a verwendet werden, das in den Figuren schwarz ausgefüllt dargestellt ist. Die übrigen Entlüftungsventile 20 können demnach als Blindverschlüsse 20b ausgebildet sein. In den Figuren sind Blindverschlüsse 20b mit einem nicht-ausgefüllten Kreis angedeutet. Insbesondere kann es wünschenswert sein, dass mindestens eines der Entlüftungsventile 20 ein Blindverschluss 20b ist.

Bei der in FIG. 2 dargestellten Ausführungsform weist jede Trennwand 30 genau eine Öffnung 35 auf.

Dabei können zwei benachbarte Trennwände 30 derart ausgebildet sein, dass die jeweilige Öffnung 35 der entsprechenden Trennwand 30 versetzt zu einer anderen Öffnung 35 einer anderen Trennwand 30 angeordnet ist. Bevorzugt sind die jeweiligen Öffnungen 35 in einem oberen Endbereich bzw. in einem der beiden oberen Eckbereichen der jeweiligen Trennwand 30 angeordnet. Eine solche Anordnung fördert einen Ausgleich bzw. Austausch des Gases, der Gase und/oder der Gasmischung und kann vermeiden, dass sich ein "toter Winkel" bildet, in welchem sich Gas staut bzw. ansammelt.

Auch können die Öffnungen 35 pro Trennwand 30 derart angeordnet sein, dass sie im Wechsel versetzt sind, d. h. alternierend versetzt sind, wie es beispielsweise in FIGS. 2 und 3 dargestellt ist. Eine derart alternierend versetzte Anordnung der einen Öffnung 35 kann vorteilhafterweise auch zu einer vereinfachten Montage und Herstellung führen, was wiederum die Kosten senkt. So können nämlich beispielsweise zwei identische Trennwände 30 derart in das Gehäuse 40 eingeführt werden, dass die eine Trennwand 30 im Vergleich zu der anderen Trennwand um 180° (um eine Achse parallel zur Einführrichtung) gedreht ist.

Die eine Öffnung 35 von mindestens einer Trennwand 30 kann aber auch genauso gut in einem zentralen, insbesondere oberen, Bereich der jeweiligen Trennwand 30 angeordnet sein.

Dabei ist es denkbar, dass alle Trennwände 30 die eine Öffnung 35 in einem zentralen, insbesondere oberen, Bereich aufweisen. Es ist allerdings genauso gut denkbar, dass nur mindestens eine Trennwand 30 die eine Öffnung 35 in einem zentralen, insbesondere oberen Bereich aufweist, wobei mindestens eine Trennwand 30, die mindestens eine Öffnung 35 gerade nicht in einem zentralen oberen Bereich aufweist.

Bei der in FIG. 2 dargestellten Ausführungsform weist das weitere Wandelement, insbesondere das Deckelelement, des Gehäuses 40 genau ein aktives Entlüftungsventil 20a auf, welches bevorzugt einer zentralen Kammer 10 zugeordnet ist.

Es ist natürlich genauso gut möglich, dass das aktive Entlüftungsventil 20a einer anderen Kammer 10 zugeordnet sein kann.

Wie in FIG. 3 dargestellt, kann beispielsweise im Falle von Energiespeichersystemen 100 mit einer hohen Gasemission ein weiteres (zusätzliches) redundantes Entlüftungsventil 20 als aktives Entlüftungsventil 20a ausgebildet sein, d.h. das weitere Wandelement, insbesondere das Deckelelement, des Gehäuses 40 weist zwei aktive Entlüftungsventile 20a auf.

Die beiden aktiven Entlüftungsventile 20a sind dabei bevorzugt Kammern 10 zugeordnet, die durch mindestens eine Kammer 10 voneinander getrennt sind, der ein Blindverschluss 20b zugeordnet ist.

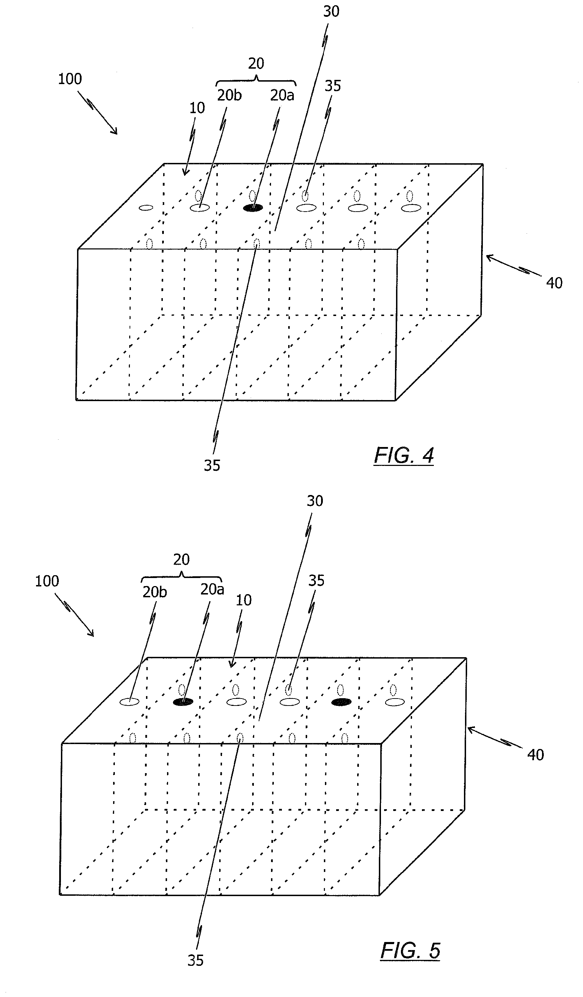

FIG. 4 zeigt ein beispielhaftes erfindungsgemäßes Energiespeichersystem 100, bei dem in dem weiteren Wandelement, insbesondere dem Deckelelement, des Gehäuses 40 genau ein aktives Entlüftungsventil 20a angeordnet ist. Um eine Gaszirkulation zwischen den Kammern zu verbessern, weist die Vielzahl von Trennwänden 30 zwei voneinander beabstandete Öffnungen 35 auf. Insbesondere sind die beiden Öffnungen 35 in einem oberen Bereich der jeweiligen Trennwand 30 angeordnet, bevorzugt in zwei oberen, Endbereichen bzw. in den beiden oberen Eckbereichen der Trennwand 30.

FIG. 5 zeigt ein beispielhaftes erfindungsgemäßes Energiespeichersystem 100, bei dem beispielsweise aufgrund einer hohen Gasemission das weitere Wandelement, insbesondere das Deckelelement, des Gehäuses 40 zwei aktive Entlüftungsventile 20a aufweist. Die Vielzahl von Trennwänden 30 weist auch gemäß der Darstellung in FIG. 5 zwei voneinander beabstandete Öffnungen 35 auf. Insbesondere sind die beiden Öffnungen 35 in einem oberen Bereich der jeweiligen Trennwand 30 angeordnet, bevorzugt in den beiden äußeren, oberen Endbereichen.

Auch wenn dies nicht explizit in den Figuren dargestellt ist, müssen nicht alle Trennwände 30 genau eine Öffnung 35 bzw. genau zwei Öffnungen 35 aufweisen. Es können vielmehr eine oder mehrere Trennwände 30 genau eine Öffnung 35 aufweisen, während die übrigen Trennwände 30 zwei oder mehrere Öffnungen 35 aufweisen.

Es ist auch denkbar, für den Fall, dass alle Trennwände 30 genau eine Öffnung 35 aufweisen, dass diese im Wechsel in einem ersten oberenBereich bzw. in einem ersten oberen Eckbereich, in einem zentralen oberen Bereich, und/oder in einem zweiten oberen Bereich bzw. in einem zweiten oberen Eckbereich der Trennwände 30 angeordnet sind.

Es ist auch denkbar, dass in mindestens einer der Öffnungen 35, insbesondere in jeder Öffnung 35, eine Membran ausgebildet ist, die selektiv nur Gase oder Gasgemische, bevorzugt Sauerstoff, Kohlenstoffdioxid und/oder Wasserstoff, durchlässt, aber keine Flüssigkeiten.

Genauso gut ist es denkbar, dass mindestens eine Trennwand 30 keine Öffnung und mindestens eine Trennwand 30 mindestens eine Öffnung aufweist, so dass mindestens zwei voneinander getrennte (abgedichtete) Gassammelräume gebildet werden. Dabei muss für jeden so gebildeten Gassammelraum mindestens ein aktives Entlüftungsventil 20a vorgesehen sein.

Beispielsweise kann bei einem Energiespeichersystem 100 mit insgesamt sechs Kammern 10 die mittlere Trennwand 30 ohne Öffnung 35 ausgebildet sein, während die übrigen Trennwände 30 mindestens eine Öffnung 35 aufweisen. So werden zwei Gassammelräume über jeweils drei Kammern 10 ausgebildet. Einem jeden Gassammelraum muss mindestens ein aktives Entlüftungsventil 20a zugeordnet sein. Beispielsweise werden jedem der beiden Gassammelräume genau ein aktives Entlüftungsventil 20a und zwei Blindverschlüsse 20b zugeordnet, wobei die Anordnung der Entlüftungsventile 20 beliebig ist.

Gemäß der vorliegenden Erfindung sind die aktiven Entlüftungsventile 20a bevorzugt als Einwegeventile mit einem vorbestimmten oder vorbestimmbaren Entlüftungsdruck ausgebildet, wobei dabei das Einwegeventil vorzugsweise in einem Verschlussstopfen integriert ist.

Das erfindungsgemäße Energiespeichersystem 100 kann dabei als ventilgeregelte Bleisäurebatterie ausgebildet sein. Auch kann das Energiespeichersystem 100 als ventilgeregelte Absorbent Glass Mat (AGM)-Bleisäurebatterie ausgebildet sein, bei der der Elektrolyt in der Glasfasermatte gebunden ist.

### Bezugszeichenliste

- 10: Kammer
- 20: Entlüftungsventile
- 20a: aktives Entlüftungsventil
- 20b: Blindverschluss
- 30: Trennwand
- 35: Öffnung
- 40: Gehäuse
- 100: Energiespeichersystem
- 200: Fahrzeug

## Patentansprüche

1. Verfahren zum Herstellen eines Energiespeichersystems (100) für ein Fahrzeug (200), insbesondere einer Starterbatterie (100) für ein Fahrzeug (200), wobei das Verfahren Folgendes aufweist:
(a) Bereitstellen eines Energiespeichersystems, welches eine Vielzahl von Energiespeicherzellen zum Bereitstellen und/oder Speichern von elektrischer Energie und ein Gehäuse (40) aufweist, das eine Vielzahl von Wandelementen aufweist, die einen Innenraum des Gehäuses (40) begrenzen, wobei das Gehäuse (40) dazu ausgebildet ist, die Vielzahl von Energiespeicherzellen in dem Innenraum des Gehäuses (40) aufzunehmen, wobei in dem Innenraum des Gehäuses (40) eine Vielzahl von Trennwänden (30) zum Unterteilen des Innenraums des Gehäuses (40) in eine Vielzahl von Kammern (10) angeordnet ist, wobei jede Kammer (10) dazu ausgebildet ist, eine Energiespeicherzelle aufzunehmen, wobei zwischen den einzelnen Kammern (10) eine Fluidverbindung ausgebildet ist, und wobei an einem der Wandelemente, vorzugsweise einem Deckelelement, des Gehäuses (40) in jeweils einem einer entsprechenden Kammer (10) zugeordneten Bereich ein Entlüftungsventil (20) angeordnet ist; und
(b) Ausbilden mindestens eines der Entlüftungsventile (20) als ein aktives Entlüftungsventil (20a) und Ausbilden der übrigen Entlüftungsventile (20) jeweils als ein Blindverschluss (20b).

2. Verfahren nach Anspruch 1
wobei an dem einen Wandelement, insbesondere an dem Deckelelement, des Gehäuses (40) genau ein aktives Entlüftungsventil (20a) angeordnet wird, und zwar bevorzugt derart, dass das aktive Entlüftungsventil (20a) einer Kammer (10) zugeordnet ist, die in einem zentralen Bereich des Innenraums des Gehäuses (40) angeordnet ist.

3. Verfahren nach Anspruch 1,
wobei an dem einen Wandelement, insbesondere an dem Deckelelement, des Gehäuses (40) zwei aktive Entlüftungsventile (20a) angeordnet werden, und zwar bevorzugt derart, dass die beiden aktiven Entlüftungsventile (20a) zwei Kammern (10) zugeordnet sind, die über mindestens eine Kammer (10), der ein Blindverschluss (20b) zugeordnet ist, voneinander getrennt sind.

4. Verfahren nach einem der Ansprüche 1 bis 3
wobei jede Trennwand (30) mindestens eine Öffnung (35) aufweist zum Ausbilden der Fluidverbindung zwischen den einzelnen Kammern (10).

5. Verfahren nach Anspruch 4,
wobei mindestens eine der Vielzahl von Trennwänden (30), insbesondere alle Trennwände (30), jeweils genau eine Öffnung (35) in einem oberen Bereich der jeweiligen Trennwand (30) aufweist.

6. Verfahren nach Anspruch 5,
wobei die eine Öffnung (35) pro Trennwand (30) derart angeordnet ist, dass mindestens zwei benachbarte Trennwände (30) die Öffnung (35) versetzt aufweisen, insbesondere alternierend versetzt, und zwar bevorzugt in den beiden oberen Endbereichen der Trennwände (30).

7. Verfahren nach Anspruch 5 oder 6,
wobei mindestens eine Trennwand (30), insbesondere alle Trennwände (30), die eine Öffnung (35) in einem oberen, zentralen Bereich der jeweiligen Trennwand (30) aufweist.

8. Verfahren nach einem der Ansprüche 4 bis 7,
wobei mindestens eine der Vielzahl von Trennwänden (30), insbesondere alle Trennwände (30), jeweils genau zwei Öffnungen (35) in einem oberen Bereich der jeweiligen Trennwand (30) aufweist, wobei die beiden Öffnungen (35) bevorzugt jeweils an zwei oberen Endbereichen der entsprechenden Trennwand (30) angeordnet sind.

9. Verfahren nach einem der Ansprüche 4 bis 8,
wobei in mindestens einer der Öffnungen (35), insbesondere in jeder Öffnung (35), eine Membran ausgebildet wird.

10. Verfahren nach einem der Ansprüche 1 bis 9,
wobei das aktive Entlüftungsventil (20a) als Einwegeventil mit einem vorbestimmten oder vorbestimmbaren Entlüftungsdruck ausgebildet ist, wobei das Einwegeventil dabei bevorzugt in einem Verschlussstopfen integriert ist.

11. Verfahren nach einem der Ansprüche 1 bis 10,
wobei die Blindverschluss (20b) als Verschlussstopfen ausgebildet sind, die dazu ausgebildet sind, den Innenraum des Gehäuses (40) dicht zu verschließen.

12. Verfahren nach einem der Ansprüche 1 bis 11,
wobei das Energiespeichersystem (100) eine Bleisäurebatterie ist.

13. Verfahren nach Anspruch 12,
wobei das Energiespeichersystem (100) als ventilgeregelte Bleisäurebatterie ausgebildet ist.

## Claims

1. Method for producing an energy-storage system (100) for a vehicle (200), in particular a starter battery (100) for a vehicle (200),
wherein the method comprises the following:
(a) providing an energy-storage system which has a multiplicity of energy-storage cells for providing and/or storing electrical energy and has a housing (40) which has a multiplicity of wall elements which delimit an interior space of the housing (40), wherein the housing (40) is configured to accommodate the multiplicity of energy-storage cells in the interior space of the housing (40), wherein a multiplicity of separating walls (30) for subdividing the interior space of the housing (40) into a multiplicity of chambers (10) are arranged in the interior space of the housing (40), wherein each chamber (10) is configured to accommodate an energy-storage cell, wherein a fluidic connection is formed between the individual chambers (10), and wherein a venting valve (20) is arranged on one of the wall elements, preferably a cover element, of the housing (40) in each case in a region assigned to a corresponding chamber (10); and
(b) configuring at least one of the venting valves (20) as an active venting valve (20a) and configuring the remaining venting valves (20) in each case as a dummy closure (20b).

2. Method according to Claim 1,
wherein exactly one active venting valve (20a) is arranged on the one wall element, in particular on the cover element, of the housing (40), specifically preferably such that the active venting valve (20a) is assigned to a chamber (10) which is arranged in a central region of the interior space of the housing (40).

3. Method according to Claim 1,
wherein two active venting valves (20a) are arranged on the one wall element, in particular on the cover element, of the housing (40), specifically preferably such that the two active venting valves (20a) are assigned to two chambers (10) which are separated from one another via at least one chamber (10) which is assigned a dummy closure (20b).

4. Method according to one of Claims 1 to 3,
wherein each separating wall (30) has at least one opening (35) for forming the fluidic connection between the individual chambers (10).

5. Method according to Claim 4,
wherein at least one of the multiplicity of separating walls (30), in particular all the separating walls (30), has/have in each case exactly one opening (35) in an upper region of the respective separating wall (30).

6. Method according to Claim 5,
wherein the one opening (35) per separating wall (30) is arranged such that at least two adjacent separating walls (30) have the opening (35) in an offset manner, in particular in an alternately offset manner, specifically preferably in the two upper end regions of the separating walls (30).

7. Method according to Claim 5 or 6,
wherein at least one separating wall (30), in particular all the separating walls (30), has/have the one opening (35) in an upper, central region of the respective separating wall (30).

8. Method according to one of Claims 4 to 7,
wherein at least one of the multiplicity of separating walls (30), in particular all the separating walls (30), has/have in each case exactly two openings (35) in an upper region of the respective separating wall (30), wherein the two openings (35) are preferably arranged in each case in two upper end regions of the corresponding separating wall (30).

9. Method according to one of Claims 4 to 8,
wherein a membrane is formed in at least one of the openings (35), in particular in each opening (35).

10. Method according to one of Claims 1 to 9,
wherein the active venting valve (20a) is in the form of a one-way valve with a predetermined or predeterminable venting pressure,
wherein the one-way valve is in this case preferably integrated in a closure plug.

11. Method according to one of Claims 1 to 10,
wherein the dummy closures (20b) are in the form of closure plugs which are configured to close off the interior space of the housing (40) in a sealed manner.

12. Method according to one of Claims 1 to 11,
wherein the energy-storage system (100) is a lead-acid battery.

13. Method according to Claim 12,
wherein the energy-storage system (100) is in the form of a valve-regulated lead-acid battery.

## Revendications

1. Procédé de fabrication d'un système de stockage d'énergie (100) pour un véhicule (200), notamment une batterie de démarrage (100) pour un véhicule (200), le procédé présentant les étapes suivantes:
(a) la fourniture d'un système de stockage d'énergie présentant une pluralité de cellules de stockage d'énergie pour fournir et/ou stocker de l'énergie électrique et un boîtier (40) présentant une pluralité d'éléments de paroi délimitant un espace intérieur du boîtier (40), le boîtier (40) étant réalisé pour recevoir la pluralité de cellules de stockage d'énergie dans l'espace intérieur du boîtier (40), une pluralité de parois de séparation (30) étant agencée dans l'espace intérieur du boîtier (40) pour diviser l'espace intérieur du boîtier (40) en une pluralité de chambres (10), chaque chambre (10) étant réalisée pour recevoir une cellule de stockage d'énergie, une liaison fluidique étant réalisée entre les chambres individuelles (10), et une soupape d'aération (20) étant agencée sur l'un des éléments de paroi, de préférence un élément de couvercle, du boîtier (40) dans une zone respective associée à une chambre (10) correspondante ; et
(b) la réalisation d'au moins l'une des soupapes d'aération (20) sous la forme d'une soupape d'aération active (20a) et la réalisation des autres soupapes d'aération (20) respectivement sous la forme d'un obturateur (20b).

2. Procédé selon la revendication 1,
dans lequel exactement une soupape d'aération active (20a) est agencée sur l'un des éléments de paroi, notamment sur l'élément de couvercle, du boîtier (40), et ce de préférence de telle sorte que la soupape d'aération active (20a) est associée à une chambre (10) qui est agencée dans une zone centrale de l'espace intérieur du boîtier (40).

3. Procédé selon la revendication 1,
dans lequel deux soupapes d'aération actives (20a) sont agencées sur l'un des éléments de paroi, notamment sur l'élément de couvercle, du boîtier (40), et ce de préférence de telle sorte que les deux soupapes d'aération actives (20a) sont associées à deux chambres (10) qui sont séparées l'une de l'autre par au moins une chambre (10) à laquelle est associé un obturateur (20b).

4. Procédé selon l'une quelconque des revendications 1 à 3,
dans lequel chaque paroi de séparation (30) présente au moins une ouverture (35) pour réaliser la communication fluidique entre les chambres individuelles (10).

5. Procédé selon la revendication 4,
dans lequel au moins l'une de la pluralité de parois de séparation (30), notamment toutes les parois de séparation (30), présente respectivement exactement une ouverture (35) dans une zone supérieure de la paroi de séparation (30) respective.

6. Procédé selon la revendication 5,
dans lequel l'unique ouverture (35) par paroi de séparation (30) est agencée de telle sorte qu'au moins deux parois de séparation (30) voisines présentent l'ouverture (35) sous forme décalée, notamment sous forme décalée en alternance, et ce de préférence dans les deux zones d'extrémité supérieures des parois de séparation (30).

7. Procédé selon la revendication 5 ou 6,
dans lequel au moins une paroi de séparation (30), notamment toutes les parois de séparation (30), présente l'ouverture (35) dans une zone centrale supérieure de la paroi de séparation (30) respective.

8. Procédé selon l'une quelconque des revendications 4 à 7,
dans lequel au moins l'une de la pluralité de parois de séparation (30), notamment toutes les parois de séparation (30), présente respectivement exactement deux ouvertures (35) dans une zone supérieure de la paroi de séparation (30) respective, les deux ouvertures (35) étant de préférence agencées respectivement dans deux zones d'extrémité supérieures de la paroi de séparation (30) correspondante.

9. Procédé selon l'une quelconque des revendications 4 à 8,
dans lequel une membrane est réalisée dans au moins l'une des ouvertures (35), notamment dans chaque ouverture (35).

10. Procédé selon l'une quelconque des revendications 1 à 9,
dans lequel la soupape d'aération active (20a) est réalisée sous forme de soupape unidirectionnelle avec une pression d'aération prédéterminée ou pouvant être prédéterminée, la soupape unidirectionnelle étant de préférence intégrée dans un bouchon de fermeture.

11. Procédé selon l'une quelconque des revendications 1 à 10,
dans lequel les obturateurs (20b) sont réalisés sous forme de bouchons de fermeture réalisés pour fermer de manière étanche l'espace intérieur du boîtier (40).

12. Procédé selon l'une quelconque des revendications 1 à 11,
dans lequel le système de stockage d'énergie (100) est une batterie plomb-acide.

13. Procédé selon la revendication 12, dans lequel le système de stockage d'énergie (100) est réalisé sous forme de batterie plomb-acide régulée par soupape.
